## Europäisches Patentamt

## European Patent Office

## Office européen des brevets

(19)

(11) Numéro de publication: **0 200 623**
**B1**

(12) # FASCICULE DE BREVET EUROPÉEN

(45) Date de publication du fascicule du brevet:
**23.11.88**

(21) Numéro de dépôt: **86400809.9**

(22) Date de dépôt: **15.04.86**

(51) Int. Cl.⁴: **G 03 B 42/02,** H 05 G 1/64,
G 03 B 7/28

(54) **Installation de radiologie.**

(30) Priorité: **19.04.85 FR 8506008**

(43) Date de publication de la demande:
**10.12.86 Bulletin 86/45**

(45) Mention de la délivrance du brevet:
**23.11.88 Bulletin 88/47**

(84) Etats contractants désignés:
**DE IT NL**

(56) Documents cité:
**EP-A-0 114 369**
**WO-A-84/04878**
**US-A-3 476 029**
**US-A-3 724 349**
**US-A-4 025 191**
**US-A-4 063 092**

(73) Titulaire: **THOMSON- CGR, 13, square Max-Hymans, F-75015 Paris (FR)**

(72) Inventeur: **Klausz, Rémy, THOMSON- CSF SCPI-19, avenue de Messine, F-75008 Paris (FR)**

(74) Mandataire: **Ballot, Paul Denis Jacques, Cabinet Ballot 84, avenue Kléber, F-75116 Paris (FR)**

EP 0 200 623 B1

## Description

L'invention concerne une installation de radiologie munie de moyens de compression de dynamique de l'image radiologique en vue d'une meilleure exploitation de la dynamique propre des moyens d'acquisition de l'image, tels que notamment une caméra de télévision.

En radiologie médicale et en particulier dans le domaine de la radiologie vasculaire, il est souvent souhaitable de réaliser une compression du contraste global de l'image radiologique pour pouvoir révéler certains détails. En effet, une telle compression de dynamique permet ensuite d'utiliser pleinement l'échelle des gris des moyens d'acquisition de l'image. Pour cela, il est connu d'agir sur le trajet des rayons X en disposant entre la source de rayons X et le patient des éléments absorbeurs des rayons X dont les caractéristiques compensent au moins partiellement les differences d'atténuation dans l'objet. Une image résultant de ce traitement est alors acquise par la chaîne de visualisation et on peut alors appliquer des traitements connus de soustraction d'images dans de bonnes conditions. Plus précisément, une image témoin est prise et mémorisée, par exemple avant injection d'un produit de contraste. Elle est ensuite soustraite systématiquement des suivantes de sorte que l'arborescence circulatoire envahie par le produit de contraste apparaît avec une très grande netteté. L'ensemble de ces traitements donne de bons résultats mais nécessite des moyens électroniques importants et coûteux avec des risques d'exposition prolongée aux rayons X tant pour le patient que pour la personne qui manipule les éléments absorbeurs, pendant la période de réglage de ceux-ci.

On connaît par ailleurs la technique du "masque flou" mise au point pour les films radiographiques. Cette méthode consiste à élaborer un tirage inverse du film et à superposer les deux tirages pour l'épreuve définitive réalisant ainsi une certaine compression de dynamique. L'invention se propose notamment de transposer ce concept, avec des moyens de nature différente, dans une installation de radiologie comportant des moyens de transmission optique entre un écran de sortie d'un récepteur de l'image radiologique (par exemple un amplificateur de luminance) et des moyens d'acquisition de l'image (par exemple une caméra de télévision). L'idée de base de l'invention consiste donc à effectuer le traitement de compensation de dynamique dans le trajet optique de l'image (en y engendrant une sorte de masque flou), en amont des moyens d'acquisition dont la dynamique propre serait trop limitée pour une acquisition précise des faibles contrastes.

Dans cet esprit, l'invention concerne donc essentiellement une installation de radiologie du type comportant des moyens de transmission optique entre un écran de sortie d'un récepteur de l'image radiologique et un capteur bidimensionnel d'image, tel qu'une caméra de télévision, lesdits moyens de transmission optique comportant un systeme de lentilles ou objectifs pour capter l'image visible délivrée par ledit écran de sortie et la reformer sur ledit capteur bidimensionnel, caractérisée en ce qu'elle comporte un atténuateur optique à transmission ajustable en au moins un certain nombre de zones, intercalé dans lesdits moyens de transmission optique et placé au moins au voisinage d'un plan focal dudit système de lentilles ou objectifs où se reforme une image réelle de ladite image visible et en ce qu'elle comporte en outre des moyens pour ajuster la transmission de chaque zone précitée en fonction de la quantité de lumière reçue par celle-ci.

L'atténuateur optique peut se présenter sous des formes très différentes. On peut par exemple, utiliser une lame de verre photochromique, analogue à celles utilisées en lunetterie. Ces composants nécessitent une énergie lumineuse importante pour être "impressionnés" correctement, aussi doit-on prévoir dans ce cas des moyens pour augmenter momentanément la luminosité de l'image transmise. En revanche, une fois que la transmission de la lame a été ajustée en chacun de ses points, en fonction de la luminosité de l'image formée sur cette lame, la grande "inertie optique" d'un tel composant se transforme en avantage dans la mesure où, par exemple, on dispose alors de suffisamment de temps pour observer l'évolution d'un produit de contraste, sans que les caractéristiques d'atténuation de la lame, définie par la pré-lumination de celle-ci, n'aient le temps de changer de façon notable.

On peut aussi faire appel à des systèmes connus, comportant essentiellement deux composants associés, respectivement une lame à atténuation variable, notamment à cristal liquide, et une lame de matériau photoconducteur accolé à la lame à atténuation variable et polarisée par une source de tension, pour faire ajuster en tout point la transmission de la lame à atténuation variable en fonction de la quantité de lumière reçue localement. Dans ce cas, la relative rapidité de réponse de ce type de dispositif convient plutôt pour le traitement d'images isolées. On peut cependant se ramener au cas précédent en décalant légèrement l'ensemble de ces deux lames du plan focal dans lequel se forme l'image réelle précitée. On obtient ainsi un nouveau type de masque flou qui limite la dynamique de l'image résultante aux basses fréquences spatiales de celle-ci. Par conséquent, les détails les plus fins de l'image et notamment l'arborescence circulatoire pour reprendre l'exemple précédent, à paraîssent de façon beaucoup plus nette puisqu'ils correspondent aux hautes fréquences spatiales de l'image concernée par la compression de dynamique effectuée.

On peut encore utiliser en tant qu'atténuateur une mosaïque de cellules atténuatrices à commande électrique, par exemple à cristaux liquides. Dans ce cas, chaque cellule est pilotée par des moyens indépendants, notamment des capteurs photosensibles (photodiodes) agencés en une mosaïque plane semblable et placée au moins au voisinage d'un plan auxiliaire où se reforme une image réelle de ladite image visible. Un intérêt de ce système réside dans le fait qu'on peut mémoriser les valeurs délivrées par les capteurs photosensibles pour une image donnée formant masque et "figer" la configuration d'atténuation de la mosaïque de cellules atténuatrices pour toutes une série d'images prises ultérieurement. La résolution du masque (dimensions des cellules atténuatrices) peut être comparable à celle de l'image. Elle peut aussi être beaucoup plus grossière, chaque cellule atténuatrice étant associée à une zone plus ou moins importante de l'image. Dans ce cas, le décalage de la mosaïque de cellules atténuatrices du plan focal permettra d'atténuer notamment les défauts résultant de la mauvaise résolution du masque.

L'invention sera mieux comprise et d'autres avantages de celle-ci apparaîtront mieux à la lumière de la description qui va suivre de plusieurs modes de réalisation possibles d'une installation conforme a son principe, donnée uniquement à titre d'exemple et faite en référence aux dessins annexés dans lesquels:

- la figure 1 est une vue schématique d'une installation de radiologie incorporant un premier mode de réalisation de l'invention;
- la figure 2 est une vue schématique partielle d'une installation analogue incorporant un second mode de réalisation de l'invention;
- la figure 3 est une vue schématique détaillée de l'atténuateur utilisé dans l'installation de la figure 2;
- la figure 4 est une vue schématique partielle illustrant un troisième mode de réalisation de l'invention; et
- la figure 5 illustre schématiquement l'atténuateur de la figure 4 et ses moyens de commande.

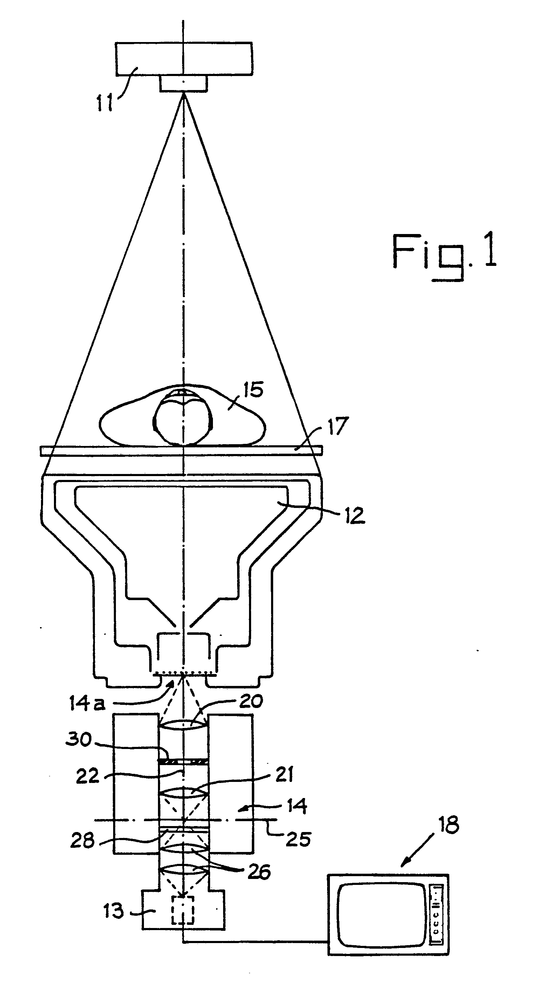

En se référant aux dessins, la figure 1 représente une installation de radiologie qui comporte, de façon classique, un tube générateur de rayons X 11, un récepteur, constitué ici par un amplificateur de luminance 12, une caméra de télévision 13 et des moyens de transmission optiques 14 intercalés entre un écran de sortie 14a de l'amplificateur 12 et la caméra 13. Le corps 15 à représenter est placé sur une table 17 entre le tube générateur 11 et l'amplificateur de luminance qui en donne une image visible reprise par le système de transmission optique puis par la caméra de télévision 13. Le signal vidéo délivré par cette dernière est transmis à un recepteur de télévision 18. Plus précisément, les moyens de transmission optiques 14 comportent deux lentilles ou objectifs 20, 21 ayant un axe optique commun 22. La lentille ou objectif 20 est disposé de façon que son plan focal soit confondu avec le plan de l'écran 14a, pour en donner une image "à l'infini" laquelle est reprise par la lentille ou objectif 21 qui en reforme une image réelle dans un plan 25. L'objectif 26 de la camera reprend cette image réelle et la reforme sur la cible du tube analyseur de la caméra de télévision 13. L'agencement des moyens de transmission optique décrit ci-dessus est spécifique de l'invention puisqu'il définit un plan 25 dans lequel est placé un atténuateur optique 28 à transmission ajustable localement. Celui-ci est donc intercalé dans lesdits moyens de transmission optiques 14 et plus particulièrement placé dans le plan focal 25 où s'y reforme une image réelle de l'image radiologique prélevée sur l'écran de sortie 14a. Comme mentionné precedemment, l'atténuateur 28 peut être légèrement décalé dudit plan focal et sa position le long de l'axe 22 peut d'ailleurs être ajustable. Dans l'exemple de la figure 1, l'atténuateur est constitué d'une lame de verre photochromique. La commande d'atténuation locale de cet atténuateur est donc optique et opérée par l'image elle-même puisque l'atténuation en chaque point de la lame photochromique augmente avec la quantité de lumière reçue en ce point. Comme mentionné précédemment, la faible sensibilité et "l'inertie" des verres photochromiques actuellement connus nécessitent un dispositif de prélumination pour "impressionner" l'atténuateur, préalablement à une période d'utilisation. Ceci peut par exemple être obtenu en ouvrant au maximum un diaphragme à iris 30, centré sur l'axe optique 22 et placé dans le trajet "à l'infini" des moyens de transmission optique, c'est-à-dire entre les deux lentilles ou objectifs 20, 21. Pendant le temps de prélumination, le tube analyseur de la caméra peut être protégé par un obturateur mécanique ou électro-optique ou bien encore en coupant son propre faisceau. Toute la série d'images suivant la prélumination bénéficie donc de la même compensation étant donné le temps de retour à l'équilibre relativement long d'un tel matériau.

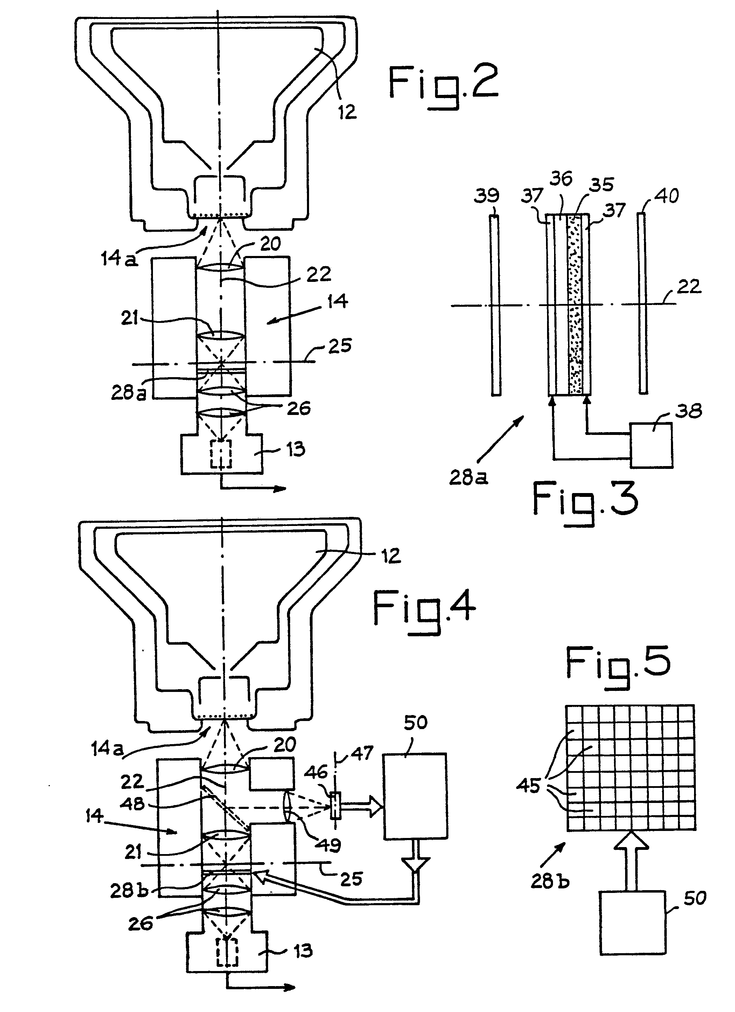

La figure 2, dans laquelle les éléments de structure analogues portent les mêmes références numériques, illustre une installation du même type dans laquelle l'atténuateur 28a est toujours du type à commande optique directe par l'image elle-même, mais constitué essentiellement de l'association d'une lame à atténuation variable, par exemple à cristal liquide, et d'une lame transparente d'un matériau photoconducteur. De tels systèmes ont par exemple été décrits dans un article de la revue "OPTICAL ENGINEERING" volume 17 N°4 de JUILLET 1978. Pour l'application envisagée à la radiologie, l'agencement pourra être conforme au schéma de la figure 3, comprenant une lame 35 de matériau doué de propriétés électro-optiques (par exemple sous forme de cristal liquide de formule $Bi_{12}$, $SiO_{20}$) à laquelle est accolée une lame photo-conductrice 36. Ces deux lames sont intercalées entre deux électrodes transparentes 37 pour appliquer une tension de polarisation fournie par une source de tension 38. Cet ensemble est place au moins au voisinage du plan focal 25 et se trouve intercalé dans un système polariseur 39-analyseur 40. L'atténuation maximum de cet atténuateur peut être ajustée en fonction de la tension appliquée. Dans tous les cas, cependant, on pourra éviter le système de prélumination. Comme mentionné précédemment, si on désire observer l'évolution d'un phénomène relativement long, supérieur au temps de réponse de l'atténuateur, on pourra décaler la position de l'ensemble des deux lames 35, 36 du plan focal 25.

La figure 4 illustre un autre type d'atténuateur dans une installation analogue. Dans ce cas, l'atténuateur 28b est constitué d'une mosaïque de cellules atténuatrices 45 à cristaux liquides (figure 5) lesquelles sont pilotées individuellement par des moyens de commande électriques comportant en tant que capteurs d'entrée des composants photosensibles 46, par exemple des photodiodes, agencés en une mosaïque analogue à la mosaïque de cellules atténuatrices, placée dans un plan auxiliaire 47 où se reforme une image réelle de l'image délivrée par l'écran de sortie 14a de l'amplificateur de luminance 12, ou bien au voisinage de ce plan. Dans l'exemple décrit, les moyens de transmission optiques 14 comportent un miroir semi-transparent 48 orienté à 45° par rapport à l'axe 22 et disposé dans la portion "à l'infini" du trajet optique, ainsi qu'une lentille ou objectif 49 disposé pour recevoir la lumière réfléchie par ce miroir et reformer une image réelle dans le plan auxiliaire 47. Dans certaines conditions de fonctionnement, en effet, les coefficients de transmission des cellules 45 dépendent des tensions de commande qui leur sont appliquées. Comme mentionné precédemment, la définition du masque défini par la mosaïque peut être relativement grossière si on le décale légèrement du plan focal 25. Les moyens de commande électriques 50 entre les photodiodes 46 et les cellules atténuatrices 45 comportent avantageusement une mémoire susceptible d'emmagasiner l'ensemble des informations représentatives des signaux délivrés par les photodiodes 46, pour "figer" la configuration d'une image de référence formant masque pendant toute une séquence d'observations. Le système des figures 4 et 5 peut être modifié. On peut en effet supprimer la mosaïque des photodiodes 46 (ainsi que le miroir 48 et l'objectif 49) et dans ce cas, une image de référence peut être prise en début d'examen par la caméra 13 elle-même si toutes les cellules atténuatrices ont été préalablement pilotées pour présenter momentanément la même atténuation. Cette image de référence est ensuite analysée par zones correspondant à la définition du masque défini par la mosaïque et les valeurs de commande correspondantes stockées dans la mémoire des moyens de commande électrique 50.

## Revendications

1. Installation de radiologie du type comportant des moyens de transmission optique (14) entre un écran de sortie (14a) d'un récepteur de l'image radiologique et un capteur bidimensionnel d'image tel qu'une caméra de télévision (15), lesdits moyens de transmission optique comportant un système de lentilles ou objectifs pour capter l'image visible délivrée par ledit ecran de sortie et la reformer sur ledit capteur bidimensionnel, caractérisée en ce qu'elle comporte un atténuateur optique (28) à transmission ajustable en au moins un certain nombre de zones, intercalé dans lesdits moyens de transmission optique et placé au moins au voisinage d'un plan focal (25) dudit système de lentilles ou objectifs où se reforme une image réelle de ladite image visible et en ce qu'elle comporte en outre des moyens pour ajuster la transmission de chaque zone précitée en fonction de la quantité de lumière reçue par celle-ci.

2. Installation de radiologie selon la revendication 1, caractérisée en ce que ledit atténuateur ajustable se compose essentiellement d'un dispositif formant lame atténuatrice à commande lumineuse (28, 28a) sensibilisé par l'image elle-même.

3. Installation de radiologie selon la revendication 2, caractérisée en ce que ledit dispositif formant lame atténuatrice comporte un verre photochromique (28) et en ce que lesdits moyens de transmission optique comportent en outre des moyens (30) pour augmenter momentanément la luminosité de ladite image réelle.

4. Installation de radiologie selon la revendication 3, caractérisée en ce que les moyens pour augmenter momentanément la luminosité de ladite image réelle comporte un diaphragme à iris (30) placé dans lesdits moyens de transmission optique dans une portion "à l'infini" du trajet optique de ladite image.

5. Installation de radiologie selon la revendication 2, caractérisée en ce que ledit dispositif formant lame atténuatrice comporte, de façon connue en soi, une première lame du type à atténuation variable (35) pilotée électriquement et une seconde lame d'un matériau photoconducteur (36) polarisé par une source de tension, ladite seconde lame étant accolée à ladite première lame.

6. Installation selon la revendication 5, caractérisée en ce que ladite première lame est un composant à cristal liquide.

7. Installation de radiologie selon la revendication 1, caractérisée en ce que ledit atténuateur ajustable comprend une mosaïque de cellules atténuatrices (45), par exemple à cristaux liquides, et des moyens de commande électrique de chacune desdites cellules.

8. Installation de radiologie selon la revendication 7, caractérisée en ce que lesdits moyens de commande électrique comportent, en tant qu'organes de pilotage, des capteurs

photosensibles (46), tels que par exemple des photodiodes, agencés en mosaïque au moins au voisinage d'un plan auxiliaire (47) où se reforme une image réelle de ladite image visible.

9. Installation selon la revendication 8, caractérisée en ce que ledit moyen de transmission optique comporte un miroir semi-transparent (48) placé dans une portion "à l'infini" du trajet optique de ladite image et une lentille ou objectif (49) disposé pour recevoir la lumière réfléchie par ce miroir et pour reformer une image réelle dans ledit plan auxiliaire (47).

10. Installation de radiologie selon la revendication 8 ou 9, caractérisée en ce que les moyens de commande électrique précités comportent des moyens de mémorisation d'informations représentatives des signaux délivrés par lesdits capteurs photosensibles (46) pour une image de référence choisie.

## Patentansprüche

1. Radiologiestation vom Typ mit Mitteln zur optischen Übertragung (14) zwischen einem Ausgangsschirm (14a) eines Empfängers des radiologischen Bildes und einem zweidimensionalen Bildaufnehmer wie z. B. einer Fersehkamera (15), wobei die genannten Mittel zur optischen Übertragung ein Linsen- oder Objektivsystem umfassen, um das sichtbare, von dem genannten Ausgangsschirm gelieferte Bild aufzunehmen und um es auf dem genannten zweidimensionalen Aufnehmer wiederherzustellen, dadurch gekennzeichnet, daß sie ein optisches Dämpfungselement (28) mit einer in wenigstens einer bestimmten Anzahl von Zonen einstellbaren Durchlässigkeit aufweist, das in die genannten Mittel zur optischen Übertragung eingefügt ist und in der Nähe von wenigstens einer Brennebene (25) des genannten Linsenoder Objektivsystems liegt, wo ein reelles Bild des genannten sichtbaren Bilds wiederhergestellt wird, und daß sie ferner Mittel zum Einstellen der Durchlässigkeit jeder genannten Zone in Abhängigkeit von der durch diese empfangenen Lichtmenge enthält.

2. Radiologiestation nach Anspruch 1, dadurch gekennzeichnet, daß das genannte einstellbare Dämpfungselement im wesentlichen aus einer eine Dämpfungsplatte mit Lichtsteuerung (28, 28a) bildenden Vorrichtung besteht, die von dem Bild selbst sensibilisiert wird.

3. Radiologiestation nach Anspruch 2, dadurch gekennzeichnet, daß die eine Dämpfungsplatte bildende genannte Vorrichtung ein photochromatisches Glas (28) umfaßt, und daß die genannten Mittel zur optischen Übertragung ferner Mittel (30) umfassen, um die Leuchtstärke des genannten reellen Bilds vorübergehend zu erhöhen.

4. Radiologiestation nach Anspruch 3, dadurch gekennzeichnet, daß die Mittel zum vorübergehenden Erhöhen der Leuchtstärke des genannten reellen Bilds eine Lochblende (30) umfassen, die in den genannten Mitteln zur optischen Übertragung in einem Teil der optischen Strecke des genannten Bilds im "Unendlichen" angebracht ist.

5. Radiologiestation nach Anspruch 2, dadurch gekennzeichnet, daß die eine Dämpfungsplatte bildende genannte Vorrichtung in an sich bekannter Weise eine erste Scheibe vom Typ mit veränderlicher Dämpfung (35) umfaßt, die elektrisch gesteuert ist, sowie eine zweite Scheibe umfaßt, welche aus einem Photoleitenden Stoff (36) besteht, der durch eine Spannungsquelle polarisieert wird, wobei die genannte zweite Scheibe an die genannte erste Scheibe angelegt ist.

6. Station nach Anspruch 5, dadurch gekennzeichnet, daß die erste genannte Scheibe eine Flüssigkristallverbindung ist.

7. Radiologiestation nach Anspruch 1, dadurch gekennzeichnet, daß das genannte einstellbare Dämpfungselement ein Mosaik aus Dämpfungszellen (45), z. B. mit Flüssigkristallen, sowie Mittel zur elektrischen Steuerung jeder der genannten Zellen umfaßt.

8. Radiologiestation nach Anspruch 7, dadurch gekennzeichnet, daß die genannten Mittel zur elektrischen Steuerung lichtempfindliche Aufnehmer (46) als Steuerelemente wie z. B. Photodioden umfassen, die wie ein Mosaik in wenigstens der Nähe einer Hilfsebene (47), wo ein reelles Bild des genannten sichtbaren Bilds wiederhergestellt wird, angeordnet sind.

9. Station nach Anspruch 8, dadurch gekennzeichnet, daß die genannten Mittel zur optischen Übertragung einen halbdurchlässigen Spiegel (48) umfassen, der in einem "unendlichen" Teil der optischen Strecke des genannten Bilds liegt, sowie eine Linse bzw. ein Objektiv (49) umfassen, die bzw. das so angeordnet ist, daß sie bzw. es das von diesem Spiegel reflektierte Licht empfängt und ein reelles Bild in der genannten Hilfsebene (47) wiederherstellt.

10. Radiologiestation nach den Ansprüchen 8 oder 9, dadurch gekennzeichnet, daß die genannten Mittel zur elektrischen Steuerung Mittel zur Speicherung von Informationen umfassen, die für die von den genannten lichtempfindlichen Aufnehmern (46) gelieferten Signale für ein gewähltes Referenzbild repräsentativ sind.

## Claims

1. A radiological installation of the type comprising means (14) for optical transmission between an output screen (14a) of a radiological image receiver and a bidimensional image sensing means such as a television camera (15), said optical transmission means comprising a system with lenses or objectives in order to detect the visible image supplied by the said output screen and to reform it on the said bidimensional sensing means, characterized in that it comprises an optical attenuator (28) whose transmission may be adjusted in at least a certain number of zones, placed within the said optical transmission means and placed at least adjacent to a focal plane (25) of the said system of lenses or objectives, where a real image of the said visible image is reformed and in that it furthermore comprises means to adjust the transmission of each above-noted zone as a function of the quantity of light received by it.

2. The radiological installation as claimed in claim 1, characterized in that the said adjustable attenuator essentially comprises a device forming an attenuating plate with a light control (28 and 28a) sensitized by the image itself.

3. The radiological installation as claimed in claim 2, characterized in that the said device forming the attenuating plate comprise a photochromic glass (28) and in that the said optical transmission means furthermore comprise means (30) to momentarily increase the luminosity of the said real image.

4. The radiological installation as claimed in claim 3, characterized in that the means for momentarily increasing the luminosity of the said real image comprise an iris diaphragm (30) placed in the said optical transmission means in an "at infinity" portion of the optical path of the said image.

5. The radiological installation as claimed in claim 2, characterized in that the device forming the attenuating plate comprises, in a manner known as such, a first plate (35) of the variable attenuation type which is electrically controlled and a second plate of a photoconductive material (36) polarized by a voltage source, the said second plate being adjacent to the first said plate.

6. The radiological installation as claimed in claim 5, characterized in that the said first plate is a liquid crystal compound.

7. The radiological installation as claimed in claim 1, characterized in that the said adjustable attenuator comprises a mosaic of attenuating cells (45), for example liquid crystal ones, and electrical control means for each of said cells.

8. The radiological installation as claimed in claim 7, characterized in that the said electrical control means comprise, as control means, photosensitive sensors (46), such as photodiodes for instance, placed in a mosaic at least adjacent to an auxiliary plane (47) where a real image of the said visible image is reformed.

9. The installation as claimed in claim 8, characterized in that the said optical transmission means comprises a semitransparent mirror (48) placed in an "at infinity" portion of the said image and a lens or objective (49) placed in order to receive the light reflected by this mirror and in order to reform a real image in the said auxiliary plane (47).

10. The radiological installation as claimed in claim 8 or claim 9, characterized in that the above-mentioned electrical control means comprise memory means for storing information representative of signals supplied by the said photosensitive sensors (46) for a selected reference image.

0 200 623

Fig.1

Fig.2

Fig.3

Fig.4

Fig.5